# EUROPEAN PATENT SPECIFICATION

(11) **EP 2 078 645 B1**
(45) Date of publication and mention of the grant of the patent: **30.04.2014**
(21) Application number: 07827876.9
(22) Date of filing: 10.10.2007
(51) Int. Cl.: B60R 21/207, B60N 2/427

(54) **AIRBAG DEVICE FOR RESTRAINING WAIST PART**
AIRBAGVORRICHTUNG ZUR RÜCKHALTUNG EINES TEILS DER HÜFTE
DISPOSITIF D'AIRBAG PERMETTANT UNE RETENUE AU NIVEAU DE LA TAILLE

(30) Priority: 16.10.2006 JP 2006280887
(43) Date of publication of application: 15.07.2009
(73) Proprietor: Autoliv Development AB, 447 83 Vårgårda (SE)
(72) Inventor: SHIMONO, Hiromasa, Kasumigaura-shi Ibaraki 3158520 (JP); OSADA, Kiyoshi, Kasumigaura-shi Ibaraki 3158520 (JP)
(74) Representative: Schön, Thilo
(86) International application number: PCT/JP2007/001097
(87) International publication number: WO 2008/047467

(56) References cited:
- EP-A1- 1 520 753
- JP-A- 07 132 789
- JP-A- 2001 171 458
- JP-A- 2005 126 051
- JP-A- 2006 143 002

## Description

### Technical Field of the Invention

The present invention relates to an airbag device for a vehicle, which has a function to restrict and protect a passenger at a seat in the vehicle when an accident happens.

### Background Art

When a frontal crash of a vehicle occurs, passengers in the vehicle tend to move forward due to force of inertia. When the passenger fastens a seatbelt, a shoulder belt and a lumbar belt of the seatbelt device might restrict forward movement of the passenger. In order to improve such restriction performance or to supplement such restriction performance when the passenger is not wearing a seatbelt, a lumbar restriction device has been proposed (for example, see Patent Publications 1-4), in which a front part of a seat cushion is lifted up immediately in response to a frontal crash or sudden-slowdown to restrict forward movement of the passenger.
[Patent Publication 1] JP H05-229378A
[Patent Publication 2] JP H10-217818A
[Patent Publication 3] GB2357466A
[Patent Publication 4] WO01/45978A1

EP 1 520 753 A1. is considered as representative of the closest prior art and discloses a generic lumbar-restriction device according to the preamble of claim 1.

### Disclosure of the Invention

### Problems to be solved by the Invention

However, according to a conventional lumbar-restriction device, when a larger pressure is applied to a developed inflatable bag from the passenger, it is difficult to support the inflatable bag with a mount bracket. As a result, restriction performance is deteriorated. On the other hand, if the interior pressure of the inflatable bag is reduced, restriction performance of the passenger, which is the fundamental function of the device, is deteriorated.

For that reason, it can be considered that strength of a mount bracket and joint members (bolts and the like) is increased or the number of points to be fixed to a vehicle body is increased. However, if such countermeasures are carried out, the stiffness of the device would be increased as whole, impact or pressure applied from the passenger to the inflatable bag is hardly absorbed, and therefore, the passenger would have damage at his or her lumbar. Further, stress is concentrated to the inflatable bag and the bag would be damaged.

In addition to solving a problem due to impact or pressure from a passenger to an inflatable bag, it is also required to easily mount an airbag device in a vehicle.

The present invention has been created in view of the above-described problems, and an object is to improve reliability of installation of an inflatable bag to a vehicle body.

Another object of the present invention is to provide an airbag device for restricting a lumbar of a passenger, which can absorb impact applied to the inflatable bag sufficiently when larger pressure (impact, energy) is applied from a passenger to a developed inflatable bag.

A further object of the present invention is to provide an airbag device for restricting a lumbar of a passenger, which can be easily installed in a vehicle.

### Means for Solving Problems

In order to achieve the above objects, according to the present invention, an airbag device for restricting a lumbar region according to the present invention comprises: an inflatable bag, which is compressed and accommodated under a seat cushion to develop and inflate when an accident occurs; an inflator which supplies an inflation gas to the inflatable bag when an accident occurs; and a mount bracket, which is arranged between a bottom surface of the inflatable bag and the vehicle body and is fixed to both the inflatable bag and the vehicle body. Further the present invention is characterized in that said mount bracket comprises: a body region connected to the bottom surface of the inflatable bag; and a first protruding region, which extends from the body region, protrudes forward or backward in relation to the forward movement of the passenger and is connectable to the vehicle body.

Said first protruding region comprises a pair of connecting regions, which extend forwardly or backwardly and are arranged at left and right sides with a predetermined space. Further, each of said pair of connecting regions have an L-shape which comprises a first portion extending forwardly or backwardly from the body region, and a second portion extending in left and right direction from the first portion, a region around an end of said second portion being connected to the vehicle body. Here, said first portion and second portion may be formed integrally or separately.

Further, preferably, said mount bracket further comprises a second protruding region, which extends from the bottom surface of the inflatable bag in a direction opposing to the direction the first protruding region extending in, the second protruding region being connectable to the vehicle body.

In the present invention, an inflatable bag may be made of metal, resin or fabric.

### Advantages of the Present Invention

In general, according to a lumbar restriction device, a mount bracket is fixed on a bottom surface of an inflatable bag, and the bracket is fixed to the vehicle body. According to a conventional lumbar restriction device, in order mainly to minimize a mounting space, a mount bracket is arranged under an inflatable bag so that the bracket is completely covered (overlapped or hiden) with the inflatable bag in plane view (in development direction). However, according to such an arrangement, as described above, when pressure (impact) is applied from the lumbar of a passenger to a developed inflatable bag, the impact may not be supported.

According to the present invention, since a mount bracket includes a first protruding region, which protruded outwardly from the inflatable bag at least forwardly or backwardly and is fixed to the vehicle body, when pressure (impact) is applied from the lumbar of a passenger to a developed inflatable bag, the impact is supported by the connecting portion of the first protruding region. According to the conventional technology, since connecting portion of a mount bracket, fixed to a vehicle body, is located under an inflatable bag, and such a connecting point is close to a point of action (load point), it is difficult to support pressure or impact at the connecting point. On the other hand, according to the present invention, since connecting portion of a mount bracket, fixed to a vehicle body, is located sufficiently apart from a point of action (load point), as compared with the conventional technology, it is easy to support pressure or impact at the connecting point. As a result, reliability of installation of an inflatable bag to a vehicle body is improved, and restriction performance of passenger is also improved.

Further, the first protruding region is designed to include a pair of connecting regions, which extend forwardly or backwardly and are arranged at left and right sides with a predetermined space, the first protruding region is deformed easily in response to external force as compared with a structure in which the first protruding region is shaped to continue in a width direction of the inflatable bag. As a result, when a larger impact (force) is applied from the passenger to the inflatable bag, the first protruding region itself is deformed, so that impact applied to the passenger and impact applied to the inflatable bag can be reduced (absorbed).

Further, since each of said pair of connecting regions includes a first portion extending forwardly or backwardly from the body region, and a second portion extending in left and right direction from the first portion, a region around an end of said second portion being connected to the vehicle body, the connecting regions themselves could be deformed more easily. According to the invention, the first and second portions form a "L" shape.

In addition, according to the present invention, the mount bracket protrudes outwardly from underneath the airbag, so that installation process can be performed above the airbag without bolt-fixing operation on the bottom of the device.

### Embodiments

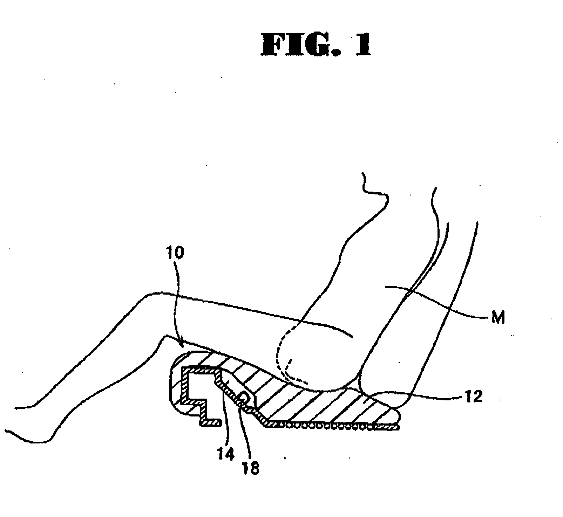

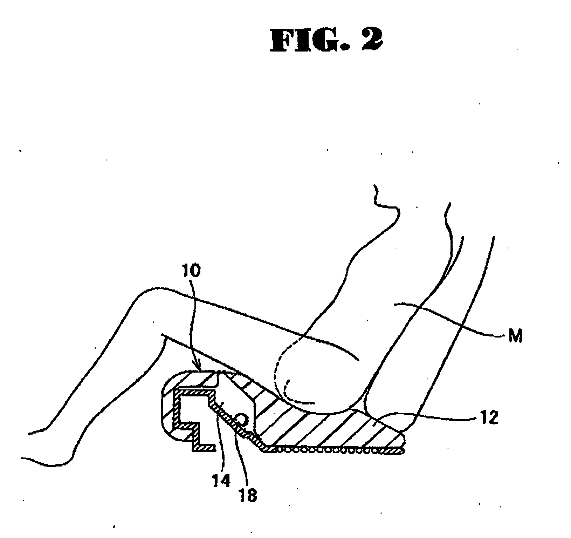

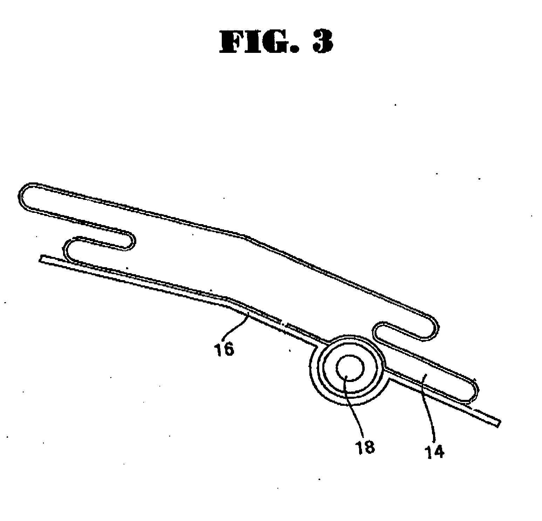

Fig. 1 is an explanatory diagram showing an operating condition (mounted condition) of a lumbar-restriction airbag device according to an embodiment of the present invention, the device being in a condition prior to development. Fig. 2 shows the device in a condition after development. Fig. 3 is a cross-sectional view of an airbag 14.

An airbag device for lumbar restraint 10 is designed to be arranged inside or under a seat cushion 12 so that a lumbar of a passenger M sitting on the seat cushion 12 is restrained to restrict forward movement of the passenger when an accident (frontal crash, etc.) occurs. The airbag device 10 includes an airbag (inflatable bag) 14, which has a bottom surface fixed to a vehicle body with a mount bracket (later described) and is accommodated in an inflatable condition; and an inflator 18 functioning as a gas supplying device to supply an inflation gas into the airbag 14. The airbag 14 may be made of a metal sheet having a thickness of about 0.4mm or a molded-resin sheet having a thickness larger than the metal sheet. Also, the airbag 14 may be made of a fabric. The airbag 14 may be arranged to develop with a tilted angle relative to a traveling direction of the vehicle.

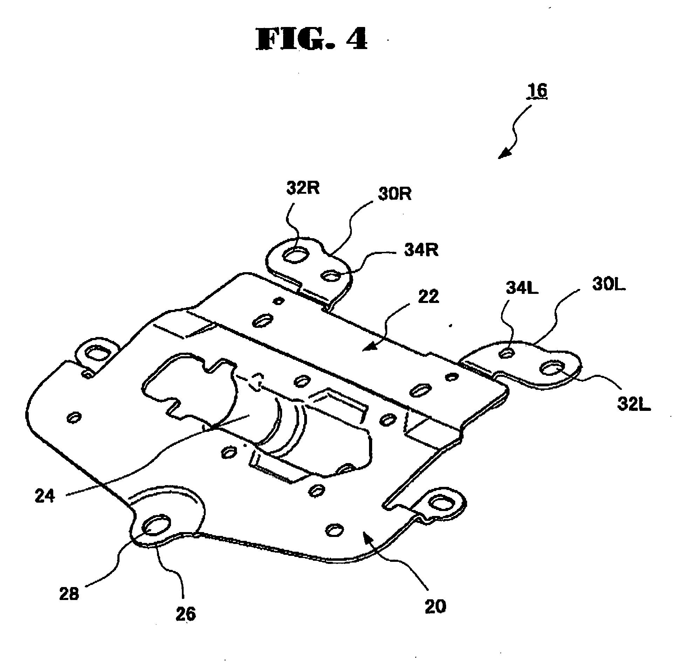

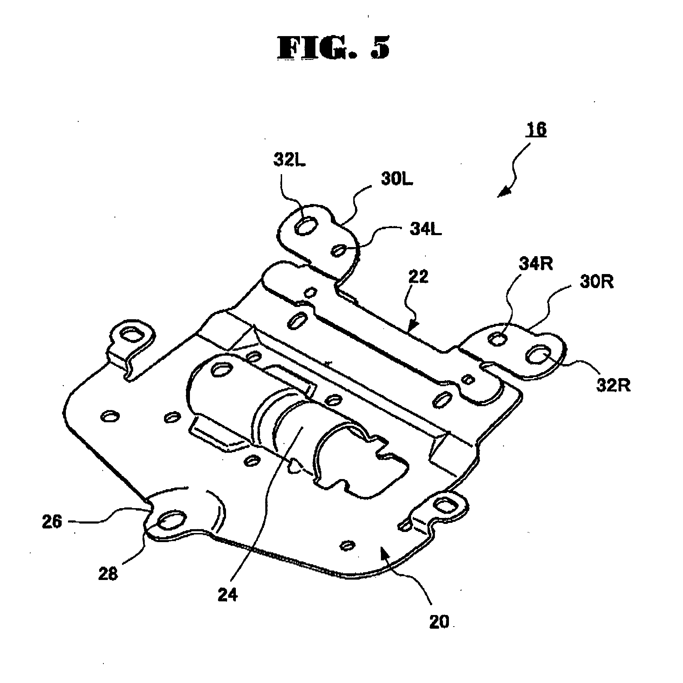

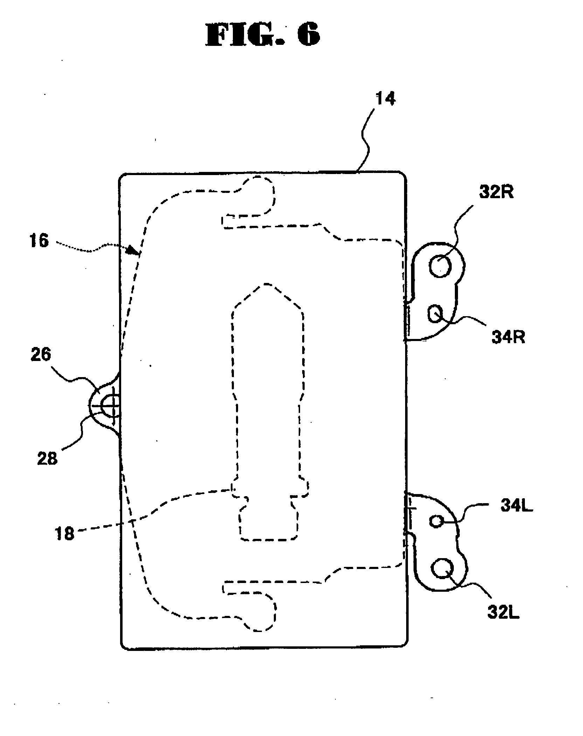

Figs. 4 and 5 are perspective views showing a mount bracket (16) used in a lumbar-restriction airbag device according to the present invention, in which Fig. 4 is a top view (viewing from the airbag 14 side) and Fig. 5 is a bottom view. Fig. 6 is a plane view showing an arrangement (relation in location) of the airbag (14) and a mount bracket (16) in a lumbar-restriction airbag device according to the present invention.

The mount bracket 16 is located generally to be hidden below the airbag 14, and is provided with a body region 20 to be fixed to the airbag 14, protruding regions 30R and 30L extending backwardly from the body region 20, and a protruding region 26 extending forwardly from the body region 20. The mount bracket 16 may be made of, for example, a galvanized sheet iron having a thickness of 2mm. The body region 20 and the protruding regions 30R and 30L may be formed separately or integrally. The body region 20 is provided at its center with a cavity 24 in which an inflator 18 is accommodated.

The forward protruding region 26 is provided with a mounting hole 28 through which a bolt is inserted to fix the bracket to the vehicle body. Also, the backward protruding region 30R is provided with a mounting hole 32R through which a bolt is inserted, and an alignment hole 34R through which an alignment pin is inserted. In the same manner, the backward protruding region 30L is provided with a mounting hole 32L through which a bolt is inserted, and an alignment hole 34L through which an alignment pin is inserted.

As shown in Fig. 6, the body region (20) of the mount bracket 16 is overlapped by the airbag 14, while the protruding regions 26, 30R and 30L extend outwardly.

As shown in Fig. 5, as an overall shape, the backward protruding regions 30R and 30L extend vertically and outwardly from the body region 20, those region having ends bending in right and left directions, respectively. Here, preferably, the mounting holes 32R and 32L are located as close to the end of the bent regions as possible. Since the mounting holes 32R and 32L are spaced widely apart from each other, the protruding regions 30R and 30L would be easily deformed when pressure is applied from the passenger to the airbag 14. That is because; a point connected to the body and a joining line of the fixing locations (32R, 32L) are offset from each other in a load direction (left and right direction in Fig. 6). Further, the protruding regions 30R and 30L may be shaped to have ends bending inwardly but not outwardly. In addition, such bending may be a gentle arc or straight line corner (right-angled, obtuse angle or acute angle).

When mounting a lumbar-restricting airbag device according to the present invention to a vehicle, the mount bracket 16 is fixed to the bottom of the airbag 14 using bolts. Next, the mount bracket 16 with the airbag 14 is arranged under a seat, pins provided to the vehicle (not shown) are inserted into the alignment holes 34R and 34L to align the bracket. After that, bolts are inserted into the mount holes 32R, 32L and 28 and are fixed.

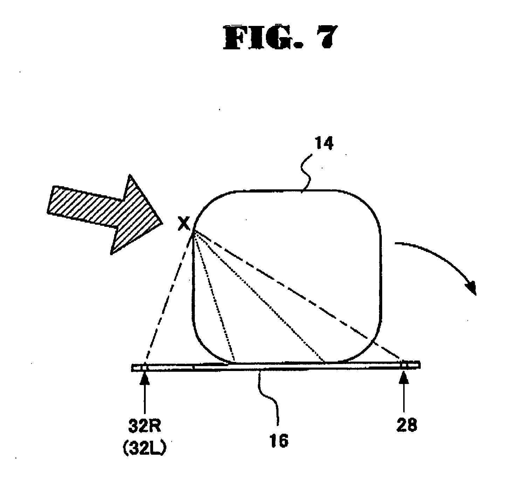

Fig. 7 is an explanatory diagram showing operation of a lumbar-restriction airbag device according to the present invention. When an accident, such as a frontal crash, occurs, the inflator 18 operates to supply an inflation gas into the airbag 14. The airbag 14 is inflated and restrict forward movement of a passenger. At this time, body weight of the passenger is applied to the airbag 14, for example, at a point "X" in Fig. 7. When pressure or impact applied to the point "X", the airbag 14 is rotated and moved forwardly. According to the conventional structure, since a mount bracket 16 and a vehicle body 16 are fixed to each other under an airbag 14, as shown with fine doted lines, distances between the point "X" and fixed points become short, and therefore, it is difficult to receive impact applied thereto. On the other hand, according to the present invention, as shown with alternate long and short dash lines, distances between the point "X" and fixed points (32R, 32L and 28) become longer, and therefore, it is relatively easy to receive impact applied to the airbag.

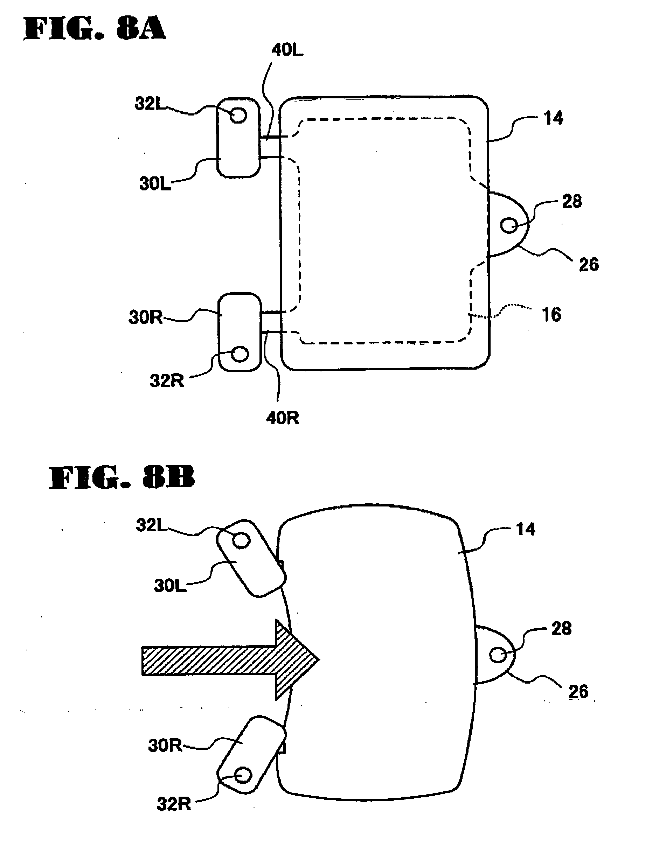

Fig. 8 is an explanatory diagram showing operation of a lumbar-restriction airbag device according to the present invention, in which (A) shows a condition just developed and (B) shows a condition pressure is applied from a passenger. In Figs. 8A and 8B, the shape of the mount bracket 16 is simplified. In structure, it can be described that the backward protruding regions 30R and 30L are provided with vertical extension portions 40R and 40L, which are shaped relatively narrow to extend from the body region of the mount bracket, and portions extending in left and right directions from the ends of the vertical extension portions.

In the same manner as the description of Fig. 7, when the airbag 14 is inflated, as shown in Fig. 8A, and then pressure is applied from the passenger to the airbag 14, the protruding regions 30R and 30L are rotated or deformed around the mounting holes (fixed points) 32R and 32L functioning as pivots. As a result, damage to the airbag 14 is absorbed and impact to the passenger is reduced.

Although according to the present embodiment, the protruding regions 30R and 30L of the mount bracket 16 extend backwardly and the protruding region 26 extends forwardly, it is possible to design the device so that the protruding regions 30R and 30L extend forwardly and the protruding region 26 extends backwardly.

Although embodiments of the present invention has been described above, the present invention is not limited by those embodiments, but can be modified or changed within a scope of the subject matter described in the claims.

### [Brief Description of Drawings]

Fig. 1 is an explanatory diagram showing an operating condition (mounted condition) of a lumbar-restriction airbag device according to an embodiment of the present invention, the device being in a condition prior to development.
Fig. 2 is an explanatory diagram showing an operating condition (mounted condition) of a lumbar-restriction airbag device according to an embodiment of the present invention, the device being in a condition after development.
Fig. 3 is a cross-sectional view showing an airbag in a contained condition according to the embodiment, the airbag being inflated.
Fig. 4 is a perspective view showing a mount bracket used in a lumbar-restriction airbag device according to the present invention, viewing from above (airbag side).
Fig. 5 is a perspective view showing a mount bracket used in a lumbar-restriction airbag device according to the present invention, viewing from below.
Fig. 6 is a plane view showing an arrangement of an airbag and a mount bracket in a lumbar-restriction airbag device according to the present invention.
Fig. 7 is an explanatory diagram showing operation of a lumbar-restriction airbag device according to the present invention.
Figs. 8A and 8B are explanatory diagrams showing operation of a lumbar-restriction airbag device according to the present invention, in which Fig. 8A shows a condition just developed and Fig. 8B shows a condition pressure is applied from a passenger.

### [Description of Reference Numerals]

14: Airbag (Inflatable Bag)
16: Mount Bracket
18: Inflator
20: Body Region
26: Forward Protruding Region
30R, 30L: Backward Protruding Region

## Claims

1. A lumbar-restriction airbag device for a vehicle, which restricts the forward movement of a lumbar region of a passenger in a vehicle when an accident occurs, which is **characterized by** comprising:
an inflatable bag (14), which is compressed and accommodated under a seat cushion to develop and inflate when an accident occurs;
an inflator (18) which supplies an inflation gas to the inflatable bag (14) when an accident occurs; and
a mount bracket, which is arranged between a bottom surface of the inflatable bag (14) and the vehicle body and is fixed to both the inflatable bag (14) and the vehicle body, wherein
said mount bracket comprises: a body region (20) connected to the bottom surface of the inflatable bag (14); and a first protruding region (30L, 30R), which extends from the body region (20) and protrudes forward or backward in relation to the forward movement of the passenger and being connectable to the vehicle body,
**characterised in that** the first protruding region (30L, 30R) comprises a pair of connecting regions, both connecting regions having an L-shape with a first portion extending forwardly or backwardly from the body region and a second portion extending from said first portion with an end of each said second portion being connectable to the vehicle body, such that the connecting regions are deformed if a large impact force is applied from the passenger to the inflatable bag.

2. An airbag device for restricting a lumbar region according to claim 1, wherein
said mount bracket further comprises a second protruding region (26), which extends from the bottom surface of the inflatable bag in a direction opposing to the direction to the first protruding region, the second protruding region being connectable to the vehicle body.

## Patentansprüche

1. Lendenrückhalte-Airbagvorrichtung für ein Fahrzeug, die die Vorwärtsbewegung eines Lendenbereichs eines Insassen in einem Fahrzeug einschränkt, wenn es zu einem Unfall kommt, die **dadurch gekennzeichnet ist, dass** sie Folgendes umfasst:
einen aufblasbaren Sack (14), der unter einem Sitzkissen zusammengedrückt und untergebracht ist, um entfaltet und aufgeblasen zu werden, wenn es zu einem Unfall kommt;
einen Gasgenerator (18), der dem aufblasbaren Sack (14) ein Füllgas zuführt, wenn es zu einem Unfall kommt; und
ein Befestigungsteil, das zwischen einer unteren Fläche des aufblasbaren Sacks (14) und der Fahrzeugkarosserie angeordnet und sowohl an dem aufblasbaren Sack (14) als auch der Fahrzeugkarosserie befestigt ist, wobei
das Befestigungsteil Folgendes umfasst: einen Körperbereich (20), der mit der unteren Fläche des aufblasbaren Sacks (14) verbunden ist; und einen ersten vorragenden Bereich (30L, 30R), der von dem Körperbereich (20) aus verläuft und bezogen auf die Vorwärtsbewegung des Insassen vorwärts oder rückwärts ragt und mit der Fahrzeugkarosserie verbindbar ist,
**dadurch gekennzeichnet, dass** der erste vorragende Bereich (30L, 30R) ein Paar Verbindungsbereiche umfasst, wobei beide Verbindungsbereiche eine L-Form mit einem ersten Abschnitt aufweisen, der vom Körperbereich aus vorwärts oder rückwärts verläuft, und einem zweiten Abschnitt, der von dem ersten Abschnitt aus verläuft, wobei ein Ende von jedem zweiten Abschnitt mit der Fahrzeugkarosserie derart verbindbar ist, dass die Verbindungsbereiche verformt werden, wenn von dem Insassen eine große Aufprallkraft auf den aufblasbaren Sack ausgeübt wird.

2. Airbagvorrichtung zum Zurückhalten eines Lendenbereichs nach Anspruch 1, wobei das Befestigungsteil ferner einen zweiten vorragenden Bereich (26) umfasst, der von der unteren Fläche des aufblasbaren Sacks aus in einer Richtung entgegengesetzt zur Richtung des ersten vorragenden Bereichs verläuft, wobei der zweite vorragende Bereich mit der Fahrzeugkarosserie verbindbar ist.

## Revendications

1. Dispositif d'airbag à fonction de retenue lombaire destiné à un véhicule, lequel limite le déplacement vers l'avant de la région lombaire d'un passager du véhicule en cas d'accident, **caractérisé en ce qu'**il comprend :
un coussin gonflable (14) qui est comprimé et logé sous un coussin de siège de manière à se déployer et à se gonfler en cas d'accident ;
un générateur de gaz (18) qui fournit un gaz de gonflage au coussin gonflable (14) en cas d'accident ; et
un support de montage qui est agencé entre une surface de fond du coussin gonflable (14) et la carrosserie du véhicule et est fixé à la fois au coussin gonflable (14) et à la carrosserie du véhicule, dans lequel
ledit support de montage comprend : une zone de carrosserie (20) reliée à la surface de fond du coussin gonflable (14), et une première zone en saillie (30L, 30R) qui s'étend à partir de la zone de carrosserie (20) et fait saillie vers l'avant ou l'arrière, en liaison avec le déplacement vers l'avant subi par le passager, et qui peut être fixée à la carrosserie du véhicule,
**caractérisé en ce que** la première zone en saillie (30L, 30R) comprend une paire de zones de fixation, lesdites deux zones de fixation présentant une forme en L, avec une première partie qui s'étend vers l'avant ou l'arrière à partir de la zone de carrosserie et une seconde partie qui s'étend à partir de ladite première partie, une extrémité de chaque seconde partie respective pouvant être reliée à la carrosserie du véhicule de telle manière que les zones de fixation se déforment si une grande force d'impact est appliquée par le passager sur le coussin gonflable.

2. Dispositif d'airbag destiné à effectuer une retenue de la région lombaire selon la revendication 1, dans lequel ledit support de montage comprend en outre une seconde zone en saillie (26) qui s'étend à partir de la surface de fond du coussin gonflable dans une direction opposée à celle de la première zone en saillie, la seconde zone en saillie pouvant être reliée à la carrosserie du véhicule.
